# EUROPÄISCHE PATENTSCHRIFT

(11) **EP 1 105 774 B1**
(45) Veröffentlichungstag und Bekanntmachung des Hinweises auf die Patenterteilung: **04.09.2002**
(21) Anmeldenummer: 00943554.6
(22) Anmeldetag: 05.05.2000
(51) Int. Cl.: G02F 1/167

(54) **ELEKTRISCH SCHALTBARE VERBUNDFOLIEN**
ELECTRICALLY SWITCHABLE COMPOSITE FILMS
FEUILLES MULTICOUCHES ELECTRIQUEMENT COMMUTABLES

(30) Priorität: 16.06.1999 DE 19927361
(43) Veröffentlichungstag der Anmeldung: 13.06.2001
(73) Patentinhaber: Creavis Gesellschaft für Technologie und Innovation mbH, 45772 Marl (DE)
(72) Erfinder: SCHMIDT, Friedrich, Georg, D-45721 Haltern (DE)
(86) Internationale Anmeldenummer: DE0001418
(87) Internationale Veröffentlichungsnummer: WO00077570

(56) Entgegenhaltungen:
- WO-A-99/56171
- US-A- 5 411 656
- US-A- 5 699 097

## Beschreibung

Die Erfindung betrifft konische Kavitäten enthaltende elektrisch schaltbare Verbundfolien unter Verwendung elektrophoretisch mobiler Partikel in einer rheologisch kontrollierbaren Suspension.

Zur Veränderung der Farbe oder der Transparenz von großen Flächen sind verschiedene Techniken wie z.B. die Thermochromie oder LCD bekannt. Einen ähnlichen technologischen Hintergrund besitzen Informationssysteme, wie z. B. Hinweisschilder, Werbetafeln, Preisschilder, Fahrplananzeigen, Computerdisplays oder allgemein Flachbildschirme. Die dargestellte Information kann fest, z. B. bei Werbeplakaten oder elektronisch veränderbar, z.B. bei Computerdisplays sein.

Entsprechende Informationssysteme dienen zur Darstellung von Texten, Symbolen oder Graphiken. Sie sollten auch bei Gegenlicht einen hohen Kontrast aufweisen, auch in spitzem Winkel lesbar sein und eine ausreichende eigene Leuchtkraft bzw. eine entsprechende externe Beleuchtung aufweisen. Die dargestellte Information kann fest, z.B. bei Werbeplakaten oder elektronisch veränderbar, z.B. bei Computerdisplays sein.

Viele dieser Informationssysteme weisen keine eigene Leuchtkraft auf und sind extern, z.B. durch normales Tages- oder Raumlicht beleuchtet, wobei jedoch häufig eine Vordergrundbeleuchtung wegen der reflexfreien Ausleuchtung bevorzugt wird.

Eine der wirtschaftlich interessanten Anwendungen für Informationssysteme sind Flachbildschirme, wie sie z. B. in tragbaren Computern, sogenannten Displays, eingesetzt werden. Flachbildschirme werden entweder mit selbstleuchtenden Anzeigen, die kein Beleuchtungssystem benötigen, oder mit nicht-selbstleuchtenden Anzeigen, die z.B. auf Basis von Flüssigkristallen- oder elektrophoretischen Systemen arbeiten, hergestellt. Nichtselbstleuchtende Displays sind vereinfacht aus mindestens zwei Schichten aufgebaut: Eine Beleuchtungseinheit und eine Schicht, auf der die elektronisch veränderbare Information dargestellt werden kann, hier Visualisierungsschicht genannt. Diese Visualisierungsschicht bildet mit einer flexiblen Trägerfolie, der transparenten Elektrodenschicht, einer zweiten Elektrodenschicht, die auch so aufgebaut sein kann, daß einzelne Pixel ansteuerbar sind, einen Verbund. Sind die einzelnen Schichten ausreichend dünn und flexibel ausgelegt, spricht man von einer elektrisch schaltbaren Verbundfolie.

Die Beleuchtungseinheit kann als Hintergrund- oder Vordergrundbeleuchtung zum Einsatz kommen. Die Art der Beleuchtungseinheit wird in Abhängigkeit von der Transparenz und/oder dem Reflexionsvermögen der Visualisierungsschicht gewählt.

### Beschreibung der Beleuchtungseinheiten:

Die Beleuchtungseinheit muß für eine gute Ausleuchtung des Sichtfeldes mit einem möglichst hohen Kontrast sorgen. Dies kann häufig nur durch leistungsfähige Beleuchtungseinheiten erreicht werden. Für die Bereitstellung der dafür aufzubringenden Energie werden jedoch entsprechend leistungsstarke Batterien benötigt, die zur Zeit noch mit einer deutlichen Erhöhung des Gesamtgewichtes verbunden sind.

Beleuchtungseinheiten von modernen Computerdisplays verbrauchen häufig über 90 % der für den gesamten Bildschirm aufzuwendenden Energie. Bei den Hintergrundbeleuchtungssystemen für Flüssigkristall-Displays (LCD) wird durch die Polarisationsschichten ein erheblicher Anteil des erzeugten Lichtes weggefiltert und steht so für die Beleuchtung nicht zur Verfügung.

In vielen Fällen werden für Hintergrundbeleuchtungssysteme von Flüssigkristall-Displays (LCD) flächige Lampen oder eine Vielzahl von Lampen mit entsprechenden Lichtdiffusorscheiben oder -gittern eingesetzt; andere Systeme gehen von einer Beleuchtungseinheit mit seitlicher Einstrahlung des Lichtes in eine Lichtleitplatte und entsprechenden Reflektionseinheiten auf der Unterseite oder anregbaren Auskoppelpunkten auf der Oberseite der Lichtleitplatte aus. Diese Techniken können nur für Hintergrundbeleuchtungssysteme und nicht für Vordergrundbeleuchtungssysteme verwendet werden, da das ausgestrahlte Licht sowohl in Richtung des Betrachters als auch auf die Visualisierungsschicht abgestrahlt wird und es deshalb schwierig, wenn überhaupt möglich ist, die Darstellungen auf der Visualisierungsschicht zu erkennen.

Andere Displaytechniken verwenden flache und dünne elektrolumineszierende Lampen oder kleine Fluoreszenzeinheiten mit einer Streuvorrichtung. Die elektrolumineszierenden Lampen verbrauchen zwar weniger Energie als die Fluoreszenz-Hintergrundbeleuchtungssysteme, sind jedoch lichtschwächer und strahlen meist nicht das gesamte Lichtspektrum, das zum Betrieb von Farbbildschirmen benötigt wird, ab. Zudem ist die Lebensdauer der elektrolumineszierenden Lampen nicht zufriedenstellend.

### Beschreibung der Visualisierungsschicht

Eine neuartige Entwicklung zur Darstellung von elektronisch veränderbarer Information stellt die "elektronische Tinte" von Prof. J. Jacobson et al. dar. Diese Technik nutzt die Orientierung von ein- oder mehrfarbigen Pigmentpartikel in einem elektrischen Feld aus, um Bildinformation darzustellen. Details können z.B. in J. Jacobson et al., IBM System Journal 36, (1997), Seite 457-463 oder B. Comiskey et al., Nature, Vol. 394, July 1998, Seite 253-255 nachgelesen werden.

Zur Herstellung von entsprechenden bipolaren, ein- oder zweifarbigen Partikeln in verschiedenen Ausführungsformen und deren Anwendung in elektrophoretisch arbeitenden Displays kann z.B. auf WO 98/03896 verwiesen werden. Hier wird beschrieben, wie diese Partikel in einer inerten Flüssigkeit suspendiert und in kleinen Blasen eines Trägermaterials eingekapselt werden. Diese Technik erlaubt die makroskopische Anzeige von zwei Farben durch Rotation eines zweifarbigen Partikels je nach angelegtem elektrischen Feld.

In WO 98/19208 wird ein ähnliches elektrophoretisches Display beschrieben, wobei elektrophoretisch mobile Partikel in einer gegebenenfalls farbigen Flüssigkeit durch ein elektrisches Feld innerhalb einer Mikrokapsel bewegt werden können. Je nach Feldrichtung orientieren sich die Partikel zu einer Elektrode und stellen so makroskopisch eine ja/nein-Farbinformation (entweder ist die Farbe der Partikel oder die Farbe der Flüssigkeit sichtbar) dar.

WO 98/41899 offenbart elektrophoretische Displays, die zwar auf den oben beschriebenen Prinzipien beruhen, jedoch entweder fluoreszierende oder reflektierende Partikel enthalten. Darüber hinaus ist auch die Verwendung einer Suspension mit flüssigkristallinem Verhalten beschrieben. Die Flüssigkristalle blockieren oder ermöglichen die elektrophoretische Migration der Partikel je nach angelegtem elektrischem Feld und verändern gleichzeitig die optischen Eigenschaften wie die Farbe der Suspension.

WO 98/41898 beschreibt ebenfalls ein solches elektrophoretisches Displaysystem, das durch seine spezielle Anordnung durch einen Druckvorgang, insbesondere durch Tintenstrahldrucktechnik, hergestellt werden kann. Vorteilhaft können sowohl die Elektroden als auch das elektrophoretische Display an sich in aufeinanderfolgenden Druckschritten hergestellt werden.

Es ist ein gemeinsames Merkmal dieser Techniken, das die Suspensionsflüssigkeit und die Partikel in Kapseln, Blasen oder sonstigen Kavitäten eines polymeren Materials eingebettet werden. Die Partikel können auch mit der Suspensionsflüssigkeit eingekapselt werden; diese Kapseln können dann entweder vorgefertigt in den Polymerisationsvorgang des Trägermaterials eingebracht oder in einer komplexen Emulsionspolymerisation gemeinsam mit dem Trägermaterial gebildet werden. In beiden Fällen liegt keine einheitliche Größe und Anordnung der Kapseln oder Kavitäten vor. Sowohl Größe als auch die zwei- bzw. dreidimensionale Verteilung der Mikrokapseln oder Kavitäten im Trägermaterial unterliegen einer schwer zu kontrollierenden Streubreite, die zum einen eine inhomogene Bildinformation ergibt und zum anderen das Erreichen eines hohen Kontrasts schwierig machen kann.

Systeme dieser Art sind insbesondere für eine Hintergrundbeleuchtung nicht geeignet, da sie bauartbestimmt nahezu undurchscheinend sind. Erfolgt eine einfache Beleuchtung mit sichtbarem Licht in Aufsicht (Vordergrundbeleuchtung), so ist der Kontrast häufig unbefriedigend. Weiterhin ist durch die Verwendung von Auflichtsystemen d. h. mit einer externen Lichtquelle mit sichtbarem Licht die Gleichmäßigkeit der Ausleuchtung bei unverändert gutem Kontrast nur schwer zu realisieren. Die Verwendung von UV-Licht und fluoreszierenden oder phosphoreszierenden, elektrophoretisch mobilen Partikeln in der Suspension ist ein gänzlich anderes Beleuchtungsprinzip, was z. B. für quasi-selbstleuchtende Verbundfolien verwendet werden kann.

In WO 99/56171 wird ein "shutter mode"-Display, basierend auf der elektrophoretischen Migration von Partikeln in einer Suspension beschrieben. Um einen besseren Kontrast von "Ein" zum "Aus"-Zustand des Displays zu erhalten, sind die Kavitäten hier konisch ausgeführt. Die konische Bauform ermöglicht die Zusammenführung der Partikel an der kleinsten Stelle der Kavität, so dass Licht in diesem Fall nahezu ungehindert aus der Kavität austreten kann. Der Betrachter nimmt nur noch einen kleinen Bereich als Störstelle wahr. Die Arbeitsweise der aus konischen Kavitäten bestehenden Displays entspricht der aus der o. g. Literatur bekannten elektrophoretischen Displays.

Nachteilig an diesen Displays ist, dass die Partikel ohne äußeres elektrisches Feld schnell wieder in eine ungeordnete, über die gesamte Kavität verteilten Zustand übergehen. Dies wird durch Wärme oder äußere Erschütterungen noch begünstigt, so dass die dargestellte Information mit der Zeit wieder verblasst, sofern nicht dauerhaft ein elektrisches Feld den gewünschten Ordnungszustand der Partikel aufrechterhält.

Aufgabe der vorliegenden Erfindung war es daher, mit elektrophoretisch mobilen Partikeln arbeitende Verbundfolien zu entwickeln, die eine flache Bauweise bei hohem Kontrast der dargestellten Information ermöglichen und deren Schaltzustände auch ohne äußeres elektrisches Feld über einen längeren Zeitraum bestehen bleiben.

Es wurde gefunden, daß Verbundfolien mit einer Visualisierungsschicht, die elektrophoretisch mobile Partikel in regelmäßig angeordneten und konisch oder kegelförmig geformten Kavitäten zur Darstellung von elektronisch veränderbarer Information einsetzen, besonders dünn hergestellt werden können und einen hohen Kontrast aufweisen.

Gegenstand der vorliegenden Erfindung sind daher Verbundfolien mit elektrisch schaltbaren Eigenschaften, aufgebaut aus zwei Steuerelektroden und einer Mikrokompartimentfolie mit Kavitäten, die elektrophoretisch mobile Partikel in einer Suspensionsflüssigkeit enthalten, dadurch gekennzeichnet, dass die Kavitäten in der Mikrokompartimentfolie regelmäßig angeordnet sind und einen kegelartigen Tiefenverlauf zeigen, das Verhältnis der Aufsichtfläche der Kavitäten zu deren Grundfläche größer als 1.5 ist und in der Suspensionsflüssigkeit elektrorheologisch wirksame Additive enthalten sind.

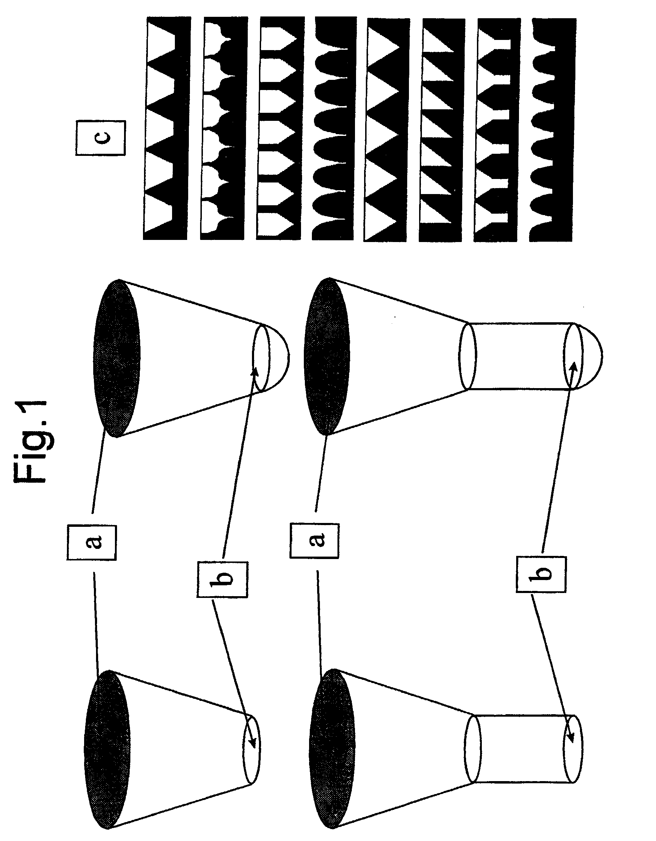

Der konische oder kegelartige Tiefenverlauf der Kavitäten ist in Fig. 1 skizziert. Es ist ein besonderes Merkmal der vorliegenden Erfindung, das die dem Auge des Betrachters zugewendete Seite der Kavitäten ("Aufsichtfläche", a in Fig. 1) größer ist, als die dem Auge abgewendete Seite ("Grundfläche", b in Fig. 1). Das Verhältnis von Aufsichtfläche zu Grundfläche der Kavitäten sollte größer als 1.5, bevorzugt größer 25, besonders bevorzugt größer 100, ganz besonders bevorzugt größer 250 sein. Fig. 1 c zeigt beispielhaft eine Auswahl von Tiefenverläufen der Kavitäten in einer Seitenansicht.

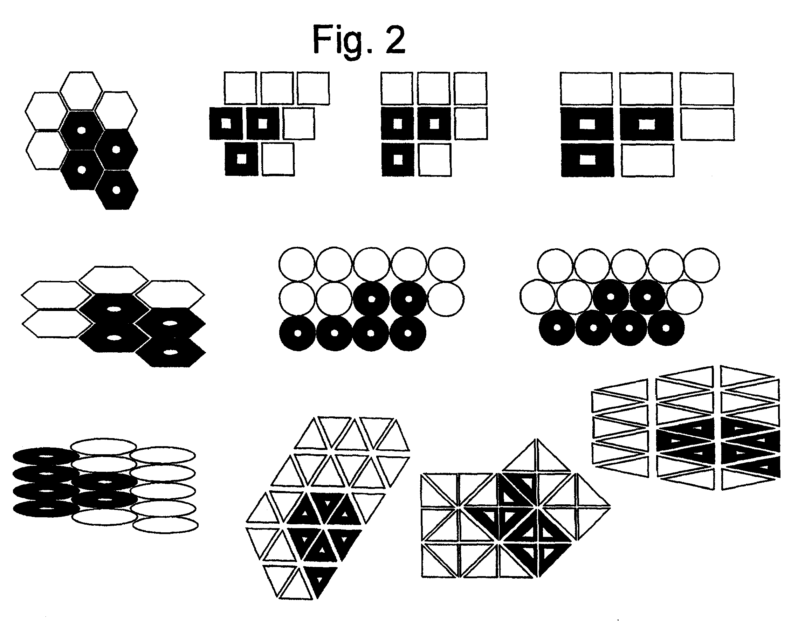

Weiterhin ist die Anordnung der Kavitäten im Trägermaterial streng regelmäßig. Es bietet sich eine Anordnung der Kavitäten in Spalten und Reihen an. Diese Anordnung muß jedoch nicht notwendigerweise rechtwinklig oder gar quadratisch sein, auch z.B. schräge Anordnung der Zeilen und Spalten oder hexagonale Anordnungen der Kavitäten sind möglich. Fig. 2 zeigt eine beispielhafte Auswahl von Anordnungen von Kavitäten in einer Aufsicht.

Gegenstand der vorliegenden Erfindung ist auch ein Verfahren zur Herstellung der Verbundfolien mit elektrisch schaltbaren optischen Eigenschaften, aufgebaut aus zwei Steuerelektroden und einer Mikrokompartimentfolie mit Kavitäten, die elektrophoretisch mobile Partikel in einer Suspensionsflüssigkeit enthalten, wobei die Kavitäten in der Mikrokompartimentfolie regelmäßig angeordnet sind und durch erodierende oder spanende Verfahren erzeugt werden, einen konischen oder kegelartigen Tiefenverlauf zeigen, wobei das Verhältnis der Aufsichtfläche der Kavitäten zu deren Grundfläche größer 1.5 ist und in der Suspensionsflüssigkeit elektrorheologisch wirksame Additive enthalten sind.

Die Kavitäten können z.B. durch Nadeln, Prägen, 3D-Drucken, Erodieren, Ätzen, Abformen mit Gießmassen, Spritzguß, fotografische oder photolithographische Verfahren oder Interferenzmethoden in ein Trägermaterial bzw. in die Mikrokompartimentfolie gebracht werden. Wie solche mikrostrukturierten Oberflächen hergestellt werden können, ist z.B. in DE 29 29 313, WO 97/06468, US 4.512.848, DE 41 35 676, WO 97/13633 oder EP 0 580 052 beschrieben. Weitere Methoden zur Herstellung kleiner Strukturen beschreiben Younan Xia und George M. Whitesides in Angew. Chem. 1998, 110 568-594. Diese "Softlithographie" genannten Methoden ermöglichen die Herstellung von sehr kleinen Strukturen im Bereich unterhalb von 1 µm bis ca. 35 nm. Eine weitere Methode ist das Mikrofräsen eines Masters, mit dem Platten oder Folien mit der gewünschten Mikrostruktur hergestellt werden können. Der Master stellt eine Negativform dar. Diese kann dann in einem Präge-, Guß- oder Spritzgußverfahren abgeformt werden.

Alternativ kann auch eine unstrukturierte Folie mit Kavitäten der gewünschten Dimensionen und Formen versehen werden. Hier bieten sich ebenfalls erodierende oder spanende Methoden wie Laserstrahlung oder Bohren/Fräsen z.B. mit einer CNC-Maschine an.

Das Trägermaterial der Kavitäten, d.h. die Mikrokompartimentfolie kann optisch transparent und/oder zusätzlich farblos oder gefärbt sein. Die Steuerelektroden sind jeweils über- und unterhalb der Kavitäten an der Trägerschicht angebracht, wobei die oberhalb der Kavitäten angeordnete, d.h. zwischen dem Betrachter und der Kavität liegende Elektrode selbstverständlich ebenso transparent oder gefärbt wie das Trägermaterial sein kann. Die unterhalb den Kavitäten angebrachte Steuerelektrode wird, um die Spannungen der Elektroden gering zu halten, meist zwischen der Beleuchtungseinheit und den Kavitäten angebracht werden und sollte dann transparent sein.

Als Trägermaterial der Kavitäten, d.h. als Mikrokompartimentfolie, eignen sich alle mechanisch oder lithographisch bearbeitbaren Polymere wie beispielsweise Thermoplaste, Polycarbonate, Polyurethane, Polysiloxane, Polyolefine wie z.B. Polyethylen, Polypropylen, COC (Cyclo-Olefinische Copolymere), Polystyrol, oder ABS-Polymerisate, PMMA, PVC, Polyester, Polyamide, thermoplastische Elastomere oder vernetzende Werkstoffe, wie UV-härtende Acrylatlacke, aber auch Polytetrafluorethylen, Polyvinylidenfluorid oder Polymere aus Perfluoralkyoxyverbindungen, sei es als Homo- oder Copolymer oder als Mischungsbestandteil eines Polymerblends.

Die Kavitäten können abgesehen von dem konischen oder kegelförmigen Tiefenverlauf in der Aufsicht jede beliebige Form aufweisen. Fig. 2 zeigt eine beispielhafte Auswahl von Aufsichten. Zweckmäßig besitzen die Kavitäten an der dem Auge des Betrachters zugewendeten Seite (Aufsichtfläche) eine runde, ovale, dreieckige, rechteckige, quadratische, sechseckige oder achteckige Fläche.

Die Aufsichtfläche der Kavitäten sollte größer als 10 000 µm², bevorzugt größer als 40 000 µm², besonders bevorzugt größer als 62 500 µm² und ganz besonders bevorzugt größer als 250 000 µm² sein.

Die Tiefe der Kavitäten kann unabhängig von der sichtbaren Fläche zwischen 20 und 250 µm, bevorzugt zwischen 30 und 200 µm, ganz besonders bevorzugt 50 bis 100 µm betragen.

Die Stegbreiten zwischen den einzelnen Kavitäten an der Oberseite der Mikrokompartimentfolie sollten so gering wie möglich gehalten werden; bevorzugt sind Stege mit einer Breite von 2 - 50 µm, besonders bevorzugt 5 - 25 µm. Die Stegoberseiten der Mikrokompartimentfolie können lichtundurchlässig beschichtet oder verspiegelt werden. So kann z.B. eine Aluminiumkaschierung, Metallbedampfung oder eine TiO₂-Beschichtung vorgenommen werden. Dies verhindert den unerwünschten Lichtaustritt an den Stegen, wenn der Lichtaustritt über die Kavitäten durch die elektrophoretisch mobilen Partikel blockiert ist.

Nachdem die Trägerschicht mit den gewünschten Kavitäten ausgerüstet worden ist, werden die Kavitäten mit den elektrophoretisch mobilen Partikeln und der Suspensionsflüssigkeit mit den elektrorheologisch wirksamen Additiven gefüllt. Dies kann z.B. mittels durch Einschlämmen und Abrakeln der überschüssigen Suspension, durch direktes Einrakeln/Einstreichen der Suspension, mittels Tintenstrahltechnik in einem Druckvorgang oder durch Selbstfüllung mittels Kapillarkräfte erfolgen. Durch diese Maßnahmen werden die Partikelsuspensionen direkt in die Kavitäten eingebracht. Die Kavitäten müssen anschließend verkapselt oder versiegelt werden. Die Füllung kann auch durch die Kapillarkräfte über feine Kanäle erfolgen, wobei die Kavitäten vor dem Füllvorgang verschlossen sind. Zweckmäßig erfolgt dies mit einer Deckfolie, die dicht mit der Mikrokompartimentfolie bzw. mit den Stegen der Kavitäten verbunden wird. Zur Versiegelung der Kavitäten können diverse Verfahren zum Einsatz kommen, wie z.B.:
- Verkleben oder thermisches Verschmelzen (Mikrowellenerwärmung, Kontakt- oder Reibschweißen, Schmelzkleber, Heißlaminierung)
- Reaktivharze, insbesondere UV-härtend (z.B. Acrylat-Dispersionen) oder 2-Komponenten-Systeme (z.B. Polyurethan-Lacksysteme), die sich nicht mit der Pigmentsuspension mischen, Grenzflächenpolymerisation, Grenzflächenpolykondensation und andere Verfahren, die z.B. auch im Bereich der Mikroverkapselungstechnologien angewandt werden, wie z.B. in "Microencapsulation : methods and industrial applications", Ed. S.Benita, Marcel Dekker, Inc. NY /1996 für die Verkapselung spherischer Partikel beschrieben.

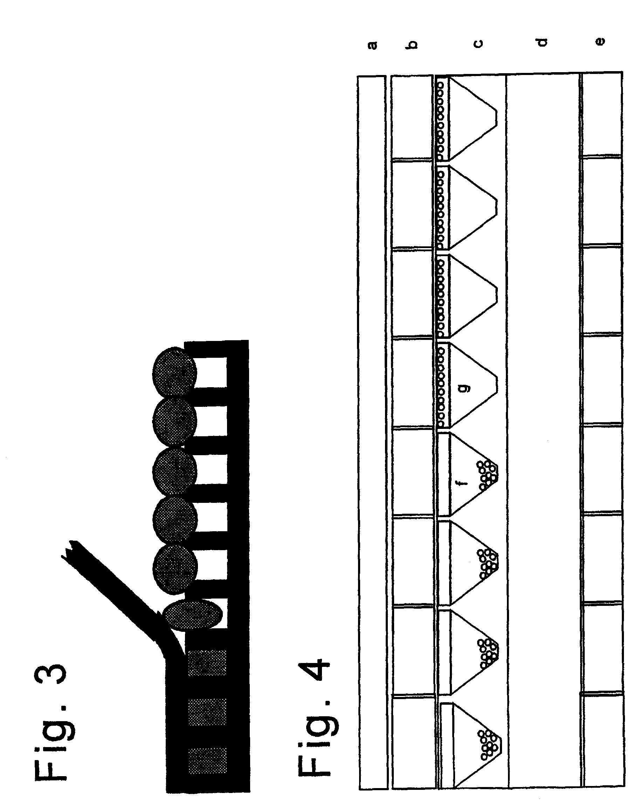

Es können auch bereits verkapselte Suspensionen von elektrophoretisch mobilen Partikeln d. h. vorbereitete Kapseln eingesetzt werden. Diese vorbereiteten Kapseln können, wie in Fig. 3 gezeigt, in die Kavitäten der Mikrokompartimentfolie eingepreßt oder eingedrückt werden. Die so gefüllten Kavitäten müssen anschließend wieder mit einer Deckfolie versiegelt werden. Diese Technik vermindert bei einem entsprechend angepaßtem Verhältnis zwischen Kapselgröße und Mikrokompartiment-Größe die Anforderungen an die Stabilität des Kapselwandmaterials für den praktischen Gebrauch deutlich, da die Kapseln durch die Stege der Mikrokompartimentfolie umschlossen werden. Weiterhin erzwingt die Einordnung der Kapseln in die vorbereiteten Kavitäten eine regelmäßige Anordnung der Kapseln.

Wichtig bei beiden Varianten ist, daß bei der Versiegelung möglichst keine Luft- oder sonstigen Gaseinschlüsse erfolgen, keine Reaktionen zwischen dem Suspensionsmedium oder den Mikropartikeln der Suspension und der Kapselschicht auftreten und daß keine Leckagen zur Umgebung bzw. Verbindungen zwischen den einzelnen Kavitäten existieren.

Die Kavitäten bzw. die vorbereiteten Kapseln können mit einer Suspension oder mit mehreren Suspensionen, z.B. Suspensionen mit einen Farbwechsel bei Umpolung des angelegten elektrischen Feldes, gefüllt werden.

Weiterhin ist es möglich, auf eine Farbgebung durch die Suspension zu verzichten, d.h. die Kavitäten neben den Partikeln mit einer optisch transparenten und farblosen Suspensionsflüssigkeit zu füllen. Als optisch transparente und farblose Flüssigkeiten eignen sich z.B. unpolare organische Flüssigkeiten wie Paraffin- oder Isoparaffin-Öle, niedermolekulare oder niedrigviskose Silikon-Öle.
Die Suspensionsflüssigkeiten können weiterhin optisch transparent und gefärbt sein. Zur Herstellung von mehrfarbigen Displays können je drei benachbarte Kavitäten unterschiedlich (z.B. rot, gelb, blau) gefärbte Suspensionsflüssigkeiten enthalten.

Gefärbte Suspensionen müssen eine lichtechte Farbe aufweisen und dürfen keine Reaktionen mit dem Material der Mikrokompartimentfolie oder der Deckschicht eingehen. Sie können weiterhin fluoreszierende oder phosphoreszierende Substanzen enthalten. Die Verwendung von fluoreszierenden oder phosphoreszierenden Substanzen ermöglicht eine höhere Lichtausbeute, und/oder den Einsatz von Lichtquellen mit einem UV-Strahlenanteil. Als Fluoreszenzfarbstoffe eignen sich z.B. Cumarin 314T der Firma Acros Organics oder Pyromethene 580.

Die Herstellung der zwischen 0,1 und 20 µm, bevorzugt zwischen 0,3 und 10 µm, besonders bevorzugt zwischen 0,4 und 5 µm im Durchmesser betragenden elektrophoretisch mobilen Partikel kann in Anlehnung an WO 98/41898, WO 98/41899 oder WO 98/0396 erfolgen. Dies beeinhaltet die Umhüllung der Pigmente mit organischen und/oder polymeren Materialien und/oder die Verwendung der reinen Pigmente, die z. B. durch Behandlung von ladungskontrollierenden Additiven (siehe insbesondere WO 98/41899) mit elektrischen Ladungen versehen worden sind.

Die Partikel müssen in der Suspensionsflüssigkeit frei beweglich sein, so daß sich die Partikel aufgrund ihrer Ladung je nach angelegtem elektrischen Feld zu einer der Elektroden bewegen können. Der "Aus"/"Ein"-Zustand einer Kavität bzw. die makroskopisch wahrnehmbare Farbe oder Transparenz der Kavitäten bzw. der Verbundfolie ist daher durch die räumliche Anordnung der Partikel bestimmt und kann durch das elektrische Feld gesteuert werden.

Mit Hilfe der Suspension mit elektrorheologischen wirksamen Additiven werden bistabile Verbundfolien erhalten. Bei Anlegen eines elektrischen Feldes orientieren sich die elektrophoretisch mobilen Partikel gemäß ihrer Ladung im Feld, d. h. der äußere Betrachter nimmt entweder die Farbe der Partikel oder die der Suspensionsflüssigkeit wahr. Die Partikel können sich bei angelegten elektrischem Feld ungehindert in der Suspension bewegen. Wird das elektrische Feld entfernt, so steigt die Viskosität der elektrorheologischen Suspension stark an und die Partikel werden in ihrem gerade eingenommenen Ordnungszustand weitgehend fixiert. Die dargestellte Information oder Farbe wird entsprechend ebenso fixiert, so dass diese auch ohne äußeres elektrisches Feld stabil erkennbar bleibt.

Die erfindungsgemäßen Verbundfolien können sehr dünn (2 bis 5 mm) sein und eignen sich daher insbesondere für dreidimensional geformte Objekte, wie z.B. die Innenseite von Windschutzscheiben.

Die Verbundfolien der Erfindung beinhalten die notwendigen technischen Vorrichtungen zur Darstellung einer Farbinformation. Die elektrophoretisch mobilen Partikel in einer mit rheologisch kontrollierbaren wirksamen Additiven versehenen Suspension sind in einer geeigneten Matrix oder Trägerschicht eingebettet - optional in entsprechenden Kavitäten oder Kompartimenten. Diese Trägerschicht ist wiederum zwischen den Steuerelektroden angeordnet.

Die elektrorheologisch wirksamen Additive können entweder eine homogen in der Suspension gelöste Substanz oder elektrophoretisch mobile Partikel mit elektrorheologischen Effekt sein.

Es ist möglich, das die Suspension mehrere Partikelarten enthält, von denen mindestens eine Partikelart den elektrorheologischen Effekt und mindestens eine weitere Partikelart den elektrophoretischen Effekt zeigt.

Suspensionen der Flüssigkeiten, die in An- oder Abwesenheit eines elektrischen Feldes ihre Viskosität ändern (elektrorheologischer Effekt, ER) sind bekannt. Es wird in der Literatur zwischen den positiven und negativen ER unterschieden, wobei die Viskosität beim positiven ER mit steigender elektrischer Feldstärke ansteigt, beim negativen ER sinkt. Die Ursache von positiven und negativem ER sind noch nicht vollständig bekannt (z. B. T. Uemura et al., Polym. Prep. ACS, Div. Polym. Chem., 1994, 35(2), 360-361; K. Minagawa et al., Journal of Intelligent Material Systems and Structures, Vol 9 8/1998, 626-631; H.C. Conrad et al., J. Rheol. 41(2) 1997, 267-281; O. Quadrat et al., Langmuir 2000, 16, 1447-1449; C. Zukowski IV et al. J. Chem. Soc., Faraday Trans. I, 1989, 85(9), 2785-2795; T. Hao et al., Langmuir 1999, 15, 918-921); werden jedoch auf eine Nachordnung von Molekülen aufgrund van-der-Waals-Wechselwirkungen zurückgeführt, die bei anlegen eines elektrischen Feldes überwunden werden.

Elektrorheologisch wirksame Additive als eine in der Suspensionsflüssigkeit gelöste Substanz können z.B. Polykondensate aus Phenylisocyanat und Polytetramethylenglycol oder p-Chlorophenylisocyanat und Polytetramethylenglycol oder Polymethylmethacrylat als Alkalisalz hydratisiert oder als Blend mit Polystyrol-block-(polethylen-co-propylen) sein.

Für die vorliegende Erfindung ist besonders ein negativer elektrorheologischer Effekt wichtig. Es sind Substanzen, Flüssigkeiten oder Suspensionen bekannt, die neben einem rheologischen, d. h. viskositätsverändernden Effekt einen Flüssigkristallinen-Effekt (LCD) bei Anlegen eines elektrischen Feldes zeigen.

Dieser zusätzliche, die optischen Eigenschaften der Suspension bzw. der Verbundfolie negativ beeinflussende LCD-Effekt ist in der vorliegenden Erfindung nicht erwünscht.

Ein solcher LCD-Effekt ist ein elektrorheologischer Effekt, der bei Suspensionen von nicht mischbaren flüssigkristallinen Substanzen, wie sie z.B. von Tajiri (Tajiri et al., J.Rheol., 41(2), 335 (1997)) beschrieben werden, auftreten kann. Mischungen aus Umgebungs-(Suspensions-) Matrix und flüssigkristallinen Substanzen führen zu phasenseparierten Morphologien, bei denen die flüssigkristalline Phase bei angelegtem elektrischen Feld ein höheres Aspektverhältnis (Länge/Durchmesser) in Feldrichtung ausbildet. Die Phasenseparierung der flüssigkristallinen Susbstanzen führt zu einer unerwünschten Änderung der optischen Eigenschaften der Suspension.

In der Literatur werden Systeme von flüssigen, inhomogenen Blends beschrieben, die nicht auf flüssigkristallinen Substanzen basieren, sondern eine höhere Dielektrizitätskonstante besitzen (z.B. Kimura et al., J.Non-Newtonian Fluid Mech. 76 (1998) 199-211), wobei die optischen Eigenschaften und die Dielektrizitätskonstante, wie dem Fachmann bekannt, modifiziert werden können.
In der vorliegenden Erfindung sind Suspensionen mit einem negativen elektrorheologischen Effekt bevorzugt, die keine oder nur geringe optische Veränderungen bei einem angelegten elektrischen Feld zeigen.

Die in der Suspension gelösten elektrorheologisch wirksamen Additive sind in der Regel polymerer Natur und daher nur bis zu einem bestimmten Molgewicht in der Suspensionsflüssigkeit löslich. Welche Substanz oder Additiv in welcher Flüssigkeit ausreichend löslich ist, kann durch orientierende Versuche unschwer ermittelt werden.

Es ist ebenso möglich, die bereits als homogen gelöste Substanz genannten Verbindungen in Partikelform, d. h. als Partikel, die nicht elektrophoretisch mobil sind, als elektrorheologische Kontrollsubstanz (rheological control agent, RCA) einzusetzen.

Weiterhin können die elektrophoretisch mobilen Partikel selbst den erforderlichen negativen elektrorheologischen Effekt zeigen, d. h. als elektrorheologisch wirksames Additiv eingesetzt werden. Dies kann z. B. durch eine Umhüllung von elektrophoretisch mobilen Partikeln mit Polykondensaten aus Phenylisocyanat und Polytetramethylenglycol oder p-Chlorophenylisocyanat und Polytetramethylenglycol oder Polymethylmethacrylat als Alkalisalz hydratisiert oder als Blend mit Polystyrol-block-(polethylen-co-propylen) erfolgen.

Die elektrophoretisch mobilen Partikel können optional zusätzlich zu der Umhüllung mit RCA-Substanzen, eine Umhüllung mit Polyacrylaten, Polymethacrylaten, Polyurethanen oder Polyamiden, entweder über oder zweckmäßig unter der RCA-Substanz aufweisen.

Die elektrophoretisch mobilen und/oder elektrorheologisch wirksamen Partikel können anorganische oder organische Pigmente wie z.B. TiO₂, Al₂O₃, ZrO₂, FeO, Fe₂O₃, Ruß, Fluoreszenzpigmente, Phtallocyanide, Porphyrine oder Azofarbstoffe enthalten. Solche Partikel können wieder eine Umhüllung aus Polyacrylaten, Polymethacrylaten, Polyurethanen oder Polyamiden besitzen.

Die Kompartimente, in denen die Suspension mit den Partikeln und dem ER-Additiv enthalten ist, können einer monomodalen, unimodalen, bimodalen oder multimodalen Größenverteilung unterliegen.

Die Kompartimente dieser unterschiedlich modalen Größenverteilungen können wiederum jeweils regelmäßig oder stochastisch in der Verbundfolie angeordnet sein. Fig. 2 zeigt eine Auswahl regelmäßiger Anordnungen unimodaler Kompartimente.

Sind Trägermaterial, Suspensionsflüssigkeit und Elektroden transparent, können die elektrisch schaltbaren optischen Eigenschaften der erfindungsgemäßen Verbundfolie mindestens zwei unterschiedlich optisch transparente Zustände sein.

Im Idealfall bedeutet dies das Umschalten der Verbundfolie zwischen "optisch transparent" und "optisch nicht-transparent".

Optische Transparenz oder nicht-Transparenz stellen die Extremschaltzustände dar. In der Praxis wird eine weitgehende Transparenz/nicht-Transparenz z.B. für das Abdunkeln oder Dimmen von Fenstern ausreichend sein.

Schließlich ist die Verwendung der erfindungsgemäßen Verbundfolien Gegenstand der vorliegenden Erfindung. Aufgrund der flachen und optional flexiblen Bauweise können die Verbundfolieen zur Herstellung von Anzeigetafeln, Computern, Uhren oder Flachbildschirmen verwendet werden.

Eine weitere Verwendung der Verbundfolie ist die Herstellung von Fensterscheiben, Abdeckungen, Gewächshausdächern, Verpackungen, Textilien, Brillen, Scheinwerferabdeckungen, Windschutzscheiben, Signalen oder Sonnenschutzvorrichtungen.

Fig. 4 zeigt einen beispielhaften Aufbau eines erfindungsgemäßen elektrisch schaltbaren Verbundfolie, wobei
a) Deckschicht
b) Frontelektrode
c) Mikrokompartimentfolie mit Kavitäten
d) Beleuchtungseinheit und
e) Gegenelektrode
bezeichnen.

Die Deckschicht a) und die Frontelektrode b) können identisch sein, die Anordnung der Beleuchtungseinheit d) und der Gegenelektrode e) kann auch umgekehrt sein.

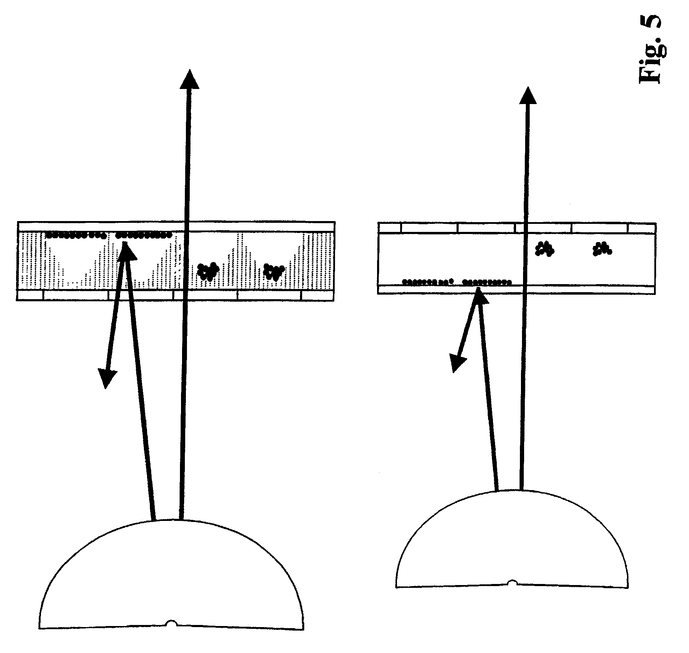

Die Beleuchtungseinheit d) ist optional und kann bei Aufbringen der Verbundfolie auf einen beleuchteten Hintergrund, der dann als Lichtquelle genutzt wird (Backlightvorrichtung in Fig.5) weggelassen werden. Wird die Verbundfolie als Dimmvorrichtung (d. h. Umschalten von Transparenten zu nicht-Transparenten Zustand) genutzt, ist eine Beleuchtungseinheit ebenfalls nicht erforderlich.

Sind die Partikel durch das elektrische Feld an der dem Betrachter abgewendeten Seite der Kavitäten (Grundfläche, "b" in Fig. 1) lokalisiert, so sind die Partikel für den Betrachter nicht oder nur wenig sichtbar, und das Licht der Beleuchtungseinheit kann nahezu ungehindert durch die Suspensionsflüssigkeit und das Trägermaterial durchtreten (Kavität f in Fig. 4). In Kavität g in Fig. 4 sind die Partikel an der dem Betrachter zugewandten Seite der Kavitäten lokalisiert und schirmen so das Licht der Beleuchtungseinheit ab. Es resultiert eine dunkle Fläche, wobei das Licht nur noch durch die Stege des Trägermaterials austreten kann. Die Stege der Mikrokompartimentfolie sollten daher so dünn wie möglich ausgeführt werden und/oder eine lichtundurchlässige Beschichtung aufweisen.

Zur Ansteuerung der Kavitäten bzw. der Partikel sind zwei Elektroden (b und e in Fig. 4) nötig, von denen zumindest die Elektrode der Grundfläche (e in Fig. 4) dem Licht der optionale Beleuchtungsschicht gegenüber weitgehend transparent sein sollte.

Die Ansteuerung der Elektroden, d. h. im Extremfall die Adressierung von einzelnen Kavitäten kann z. B. durch eine Reihen-/Spaltenanordnung von Schaltereinheiten gemäß WO 97/04398 erfolgen. Sind die Kavitäten für eine Einzelansteuerung zu klein, so werden mehrere Kavitäten pro Schaltereinheit geschaltet.

Die Beleuchtungseinheit (d in Fig. 4) sollte eine gleichmäßige Ausleuchtung des Displays ermöglichen, aber dennoch flach sein. Hier bietet sich der Einsatz von seitlich angebrachten Lichtquellen an, deren Licht durch eine Lichtleiterplatte über das gesamte Sichtfeld verteilt wird. Stark lichtstreuende Kunststoffplatten werden z.B. in EP 0 645 420 offenbart. Diese Platten sind in einer Weise aufgebaut, daß die innere Totalreflexion des eingestrahlten Lichts vermieden und statt dessen eine Beugung des Lichts aus der Platte bzw. in der vorliegenden Erfindung aus der Mikrokompartimentfolie heraus ermöglicht wird. Weitere Ausführungsbeispiele zu Lichtleiterplatten finden sich in EP-0 645 420 und EP-0 590 471. Diese Beleuchtungssysteme werden z.B. für hintergrundbeleuchtete Hinweisschilder eingesetzt.

Geeignete Lichtleiterplatten oder Streuplatten enthalten farblose, aber unterschiedlich lichtbrechende Partikel in einem farblosem Matrixmaterial. Dadurch wird die Ausbreitungsrichtung der in die Platte eintretenden Lichtstrahlen stetig geringfügig geändert und es erfolgt ein über die Plattenoberfläche gleichmäßig verteilter Lichtaustritt unter sehr kleinem Winkel. Zweckmäßigerweise werden solche Lichtleiterplatten von einer Kante beleuchtet, so daß durch die Lichtbrechung eine gleichmäßige Lichtabstrahlung über die Plattenoberflächen erhalten wird.

Um eine gleichmäßige Leuchtdichte zu erreichen, kann an mehreren Kanten der Beleuchtungseinheit Licht eingestrahlt werden.

Die innere Totalreflexion des eingestrahlten Lichts kann auch durch eine Anpassung der Form der Kavitäten an den Brechungsindex des Materials der Mikrokompartimentfolie vermieden werden.

## Patentansprüche

1. Verbundfolien mit elektrisch schaltbaren optischen Eigenschaften, aufgebaut aus zwei Steuerelektroden und einer Mikrokompartimentfolie mit Kavitäten, die elektrophoretisch mobile Partikel in einer Suspensionsflüssigkeit enthalten,
**dadurch gekennzeichnet,**
**daß** die Kavitäten in der Mikrokompartimentfolie regelmäßig angeordnet sind und einen kegelartigen Tiefenverlauf zeigen, wobei das Verhältnis der Aufsichtfläche der Kavitäten zu deren Grundfläche größer 1.5 ist und in der Suspensionsflüssigkeit elektrorheologisch wirksame Additive enthalten sind.

2. Verbundfolien gemäß Anspruch 1,
**dadurch gekennzeichnet,**
**daß** die Mikrokompartimentfolie optisch transparent ist.

3. Verbundfolien gemäß den Ansprüchen 1 oder 2,
**dadurch gekennzeichnet,**
**daß** die Suspensionsflüssigkeit optisch transparent und farblos ist.

4. Verbundfolien gemäß den Ansprüchen 1 oder 2,
**dadurch gekennzeichnet,**
**daß** die Suspensionsflüssigkeit optisch transparent und gefärbt ist.

5. Verbundfolien gemäß Anspruch 4,
**dadurch gekennzeichnet,**
**daß** je drei benachbarte Kavitäten unterschiedlich gefärbte Suspensionsflüssigkeiten enthalten.

6. Verbundfolien gemäß einem der Ansprüche 1 bis 5,
**dadurch gekennzeichnet,**
**daß** die Aufsichtfläche der Kavitäten größer als 10 000 µm² ist

7. Verbundfolien gemäß Anspruch 6,
**dadurch gekennzeichnet,**
**daß** die Aufsichtfläche der Kavitäten größer als 250 000 µm² ist.

8. Verbundfolien gemäß einem der Ansprüche 1 bis 7,
**dadurch gekennzeichnet,**
**daß** die Kavitäten eine Tiefe von 20 bis 250 µm aufweisen.

9. Verbundfolien gemäß Anspruch 8,
**dadurch gekennzeichnet,**
**daß** die Kavitäten eine Tiefe von 30 bis 200 µm aufweisen.

10. Verbundfolien gemäß einem der Ansprüche 1 bis 9,
**dadurch gekennzeichnet,**
**daß** die Kavitäten in der Mikrokompartimentfolie an der Oberseite durch Stege mit einer Breite von 2 bis 50 µm von einander getrennt sind.

11. Verbundfolien gemäß Anspruch 10,
**dadurch gekennzeichnet,**
**daß** die Kavitäten in der Mikrokompartimentfolie an der Oberseite durch Stege mit einer Breite von 5 bis 25 µm von einander getrennt sind.

12. Verbundfolien gemäß einem der Ansprüche 10 oder 11,
**dadurch gekennzeichnet,**
**daß** die Stegoberseiten der Mikrokompartimentfolie lichtundurchlässig beschichtet sind.

13. Verbundfolien gemäß einem der Ansprüche 1 bis 12,
**dadurch gekennzeichnet,**
**dass** das Additiv eine in der Suspensionsflüssigkeit homogen gelöste Substanz ist, die den elektrorheologischen Effekt erzeugt.

14. Verbundfolien gemäß einem der Ansprüche 1 bis 13,
**dadurch gekennzeichnet,**
**dass** als in der Suspensionsflüssigkeit gelöste Substanz mit einem elektrorheologischen Effekt Polykondensate aus Phenylisocyanat und Polytetramethylenglycol oder p-Chlorophenylisocyanat und Polytetramethylenglycol oder Polymethylmethacrylat als Alkalisalz hydratisiert oder als Blend mit Polystyrol-block-(polyethylen-co-propylen) verwendet werden.

15. Verbundfolien gemäß einem der Ansprüche 1 bis 12,
**dadurch gekennzeichnet,**
**dass** die elektrophoretisch mobilen Partikel den elektrorheologischen Effekt zeigen.

16. Verbundfolien gemäß Anspruch 15,
**dadurch gekennzeichnet,**
**dass** in der Suspension mehrere Partikelarten vorliegen, wobei mindestens eine Partikelart den elektrorheologischen Effekt und mindestens eine Partikelart den elektrophoretischen Effekt zeigt.

17. Verbundfolien gemäß einem der Ansprüche 15 oder 16,
**dadurch gekennzeichnet,**
**dass** die elektrophoretisch mobilen Partikel mit Polykondensaten aus Phenylisocyanat und Polytetramethylenglycol oder p-Chlorophenylisocyanat und Polytetramethylenglycol, Polymethylmethacrylat als Alkalisalz hydratisiert oder als Blend mit Polystyrol-block-(polyethylen-co-propylen) umhüllt sind.

18. Verbundfolien gemäß einem der Ansprüche 15 oder 16,
**dadurch gekennzeichnet,**
**dass** in der suspension elektrophoretisch nicht mobile Partikel vorliegen, die Polyhondensate aus Phenylisocyanat und Polytetramethylenglycol oder p-Chlorophenylisocyanat und Polytetramethylenglycol, Polymethylmethacrylat als Alkalisalz hydratisiert oder als Blend mit Polystyrol-block-(polyethylen-co-propylen) sind.

19. Verbundfolien gemäß einem der Ansprüche 1 bis 18,
**dadurch gekennzeichnet**,
die Suspension in Kompartimenten mit einer monomodalen, unimodalen, bimodalen oder multimodalen Größenverteilung enthalten ist.

20. Verbundfolien gemäß einem der Ansprüche 1 bis 18,
**dadurch gekennzeichnet,**
**dass** die Suspension in regelmäßig oder stochastisch angeordneten Kompartimenten mit einer unimodalen Größenverteilung enthalten ist.

21. Verbundfolien gemäß einem der Ansprüche 1 bis 18,
**dadurch gekennzeichnet, dass** die Suspension in regelmäßig oder stochastisch angeordneten Kompartimenten mit einer bimodalen Größenverteilung enthalten ist.

22. Verbundfolien mit elektrisch schaltbaren optischen Eigenschaften gemäß einem der Ansprüche 1 bis 18,
**dadurch gekennzeichnet,**
**dass** die Suspension in regelmäßig oder stochastisch angeordneten Kompartimenten mit einer multimodalen Größenverteilung enthalten ist.

23. Verbundfolien gemäß einem der Ansprüche 1 bis 22,
**dadurch gekennzeichnet,**
**dass** die elektrisch schaltbaren optischen Eigenschaften mindestens zwei unterschiedliche optische Transparenzen sind.

24. Verbundfolien gemäß einem der Ansprüche 1 bis 23,
**dadurch gekennzeichnet,**
**dass** die elektrophoretisch mobilen Partikel anorganische oder organische Pigmente enthalten.

25. Verbundfolien gemäß Anspruch 24,
**dadurch gekennzeichnet,**
**dass** die anorganischen oder organischen Pigmente TiO₂, Al₂O₃, ZrO₂, FeO, Fe₂O₃, Ruß, Fluoreszenzpigmente, Phtallocyanine, Porphyrine oder Azofarbstoffe enthalten.

26. Verbundfolien gemäß einem der Ansprüche 1 bis 25,
**dadurch gekennzeichnet,**
**dass** die elektrophoretisch mobilen Partikel mit Polyacrylaten, Polymethacrylaten, Polyurethanen oder Polyamiden umhüllt sind.

27. Verfahren zu Herstellung von Verbundfolien mit elektrisch schaltbaren optischen
Eigenschaften, aufgebaut aus zwei Steuerelektroden und einer Mikrokompartimentfolie mit Kavitäten, die elektrophoretisch mobile Partikel in einer Suspensionsflüssigkeit enthalten, **dadurch gekennzeichnet,**
**daß** die Kavitäten in der Mikrokompartimentfolie regelmäßig angeordnet sind und durch erodierende oder spanende Verfahren erzeugt werden, einen konischen oder kegelartigen Tiefenverlauf zeigen, wobei das Verhältnis der Aufsichtfläche der Kavitäten zu deren Grundfläche größer 1.5 ist und in der Suspensionsflüssigkeit elektrorheologisch wirksame Additive enthalten sind.

28. Verfahren zu Herstellung von Verbundfolien gemäß Anspruch 27,
**dadurch gekennzeichnet,**
**daß** die Kavitäten in der Mikrokompartimentfolie durch erodierende Laserstrahlung erzeugt werden.

29. Verwendung der Verbundfolien mit elektrisch schaltbaren optischen Eigenschaften gemäß einem der Ansprüche 1 bis 26 für Flachbildschirme, Uhren, Anzeigetafeln oder Computern.

30. Verwendung der Verbundfolien mit elektrisch schaltbaren optischen Eigenschaften gemäß einem der Ansprüche 1 bis 26 für die Herstellung von Fensterscheiben, Abdeckungen, Gewächshausdächern, Verpackungen, Textilien, Brillen, Scheinwerferabdeckungen, Windschutzscheiben, Signalen oder Sonnenschutzvorrichtungen.

## Claims

1. A composite film with electrically switchable optical properties, constructed from two control electrodes and a microcompartment film with cavities which contain electrophoretically mobile particles in a suspension liquid, **characterized in that** the cavities in the microcompartment film are arranged regularly and exhibit a cone-like depth profile, the ratio of the visible surface of the cavities to their base surface being greater than 1.5 and electrorheologically active additives being contained in the suspension liquid.

2. A composite film according to claim 1, **characterized in that** the microcompartment film is optically transparent.

3. A composite film according to either of claims 1 and 2, **characterized in that** the suspension liquid is optically transparent and colourless.

4. A composite film according to either of claims 1 and 2, **characterized in that** the suspension liquid is optically transparent and coloured.

5. A composite film according to claim 4, **characterized in that** each group of three neighbouring cavities contain differently coloured suspension liquids.

6. A composite film according to any one of claims 1 to 5, **characterized in that** the visible surface of the cavities is greater than 10 000 µm².

7. A composite film according to claim 6, **characterized in that** the visible surface of the cavities is greater than 250 000 µm².

8. A composite film according to any one of claims 1 to 7, **characterized in that** the cavities have a depth of from 20 to 250 µm.

9. A composite film according to claim 8, **characterized in that** the cavities have a depth of from 30 to 200 µm.

10. A composite film according to any one of claims 1 to 9, **characterized in that** the cavities in the microcompartment film are separated from one another on the upper side by spans with a width of from 2 to 50 µm.

11. A composite film according to claim 10, **characterized in that** the cavities in the microcompartment film are separated from one another on the upper side by spans with a width of,from 5 to 25 µm.

12. A composite film according to either of claims 10 and 11, **characterized in that** the span upper sides of the microcompartment film are coated in a way which is opaque to light.

13. A composite film according to any one of claims 1 to 12, **characterized in that** the additive is a substance, homogeneously dissolved in the suspension liquid, which produces an electrorheological effect.

14. A composite film according to any one of claims 1 to 13, **characterized in that** condensation polymers of phenyl isocyanate and polytetramethylene glycol or p-chlorophenyl isocyanate and polytetramethylene glycol or polymethyl methacrylate as an alkali metal salt in hydrated form or as a blend with polystyrene-block-(polyethylene-co-propylene) are used as the substance with an electrorheological effect which is dissolved in the suspension liquid.

15. A composite film according to any one of claims 1 to 12, **characterized in that** the electrophoretically mobile particles exhibit the electrorheological effect.

16. A composite film according to claim 15, **characterized in that** a plurality of particle types are present in the suspension, at least one particle type exhibiting the electrorheological effect and at least one particle type exhibiting the electrophoretic effect.

17. A composite film according to either of claims 15 and 16, **characterized in that** the electrophoretically mobile particles are encased with condensation polymers of phenyl isocyanate and polytetramethylene glycol or p-chlorophenyl isocyanate and polytetramethylene glycol, polymethyl methacrylate as an alkali metal salt in hydrated form or as a blend with polystyrene-block-(polyethylene-co-propylene).

18. A composite film according to either of claims 15 and 16, **characterized in that** electrophoretically immobile particles are present in the suspension, which are condensation polymers of phenyl isocyanate and polytetramethylene glycol or p-chlorophenyl isocyanate and polytetramethylene glycol, polymethyl methacrylate as an alkali metal salt in hydrated form or as a blend with polystyrene-block-(polyethylene-co-propylene).

19. A composite film according to any one of claims 1 to 18, **characterized in that** the suspension is contained in compartments with a monomodal, unimodal, bimodal or multimodal size distribution.

20. A composite film according to any one of claims 1 to 18, **characterized in that** the suspension is contained in regularly or stochastically arranged compartments with a unimodal size distribution.

21. A composite film according to any one of claims 1 to 18, **characterized in that** the suspension is contained in regularly or stochastically arranged compartments with a bimodal size distribution.

22. A composite film with electrically switchable optical properties according to any one of claims 1 to 18, **characterized in that** the suspension is contained in regularly or stochastically arranged compartments with a multimodal size distribution.

23. A composite film according to any one of claims 1 to 22, **characterized in that** the electrically switchable optical properties are at least two different optical transparencies.

24. A composite film according to any one of claims 1 to 23, **characterized in that** the electrophoretically mobile particles contain inorganic or organic pigments.

25. A composite film according to claim 24, **characterized in that** the inorganic or organic pigments contain TiO₂, Al₂O₃, ZrO₂, FeO, Fe₂O₃, carbon black, fluorescent pigments, phthalocyanines, porphyrins or azo dyes.

26. A composite film according to any one of claims 1 to 25, **characterized in that** the electrophoretically mobile particles are encased with polyacrylates, polymethacrylates, polyurethanes or polyamides.

27. A method for the preparation of composite films with electrically switchable optical properties, constructed from two control electrodes and a microcompartment film with cavities which contain electrophoretically mobile particles in a suspension liquid, **characterized in that** the cavities in the microcompartment film are arranged regularly and are produced by eroding or machining methods, and exhibit a conical or cone-like depth profile, the ratio of the visible surface of the cavities to their base surface being greater than 1.5 and electrorheologically active additives being contained in the suspension liquid.

28. A method for the preparation of composite films according to claim 27, **characterized in that** the cavities in the microcompartment film are produced by eroding laser radiation.

29. The use of composite films with electrically switchable optical properties according to any one of claims 1 to 26 for flat screens, clocks, display panels or computers.

30. The use of composite films with electrically switchable optical properties according to any one of claims 1 to 26 for production of window panes, coverings, greenhouse roofs, packaging, textiles, spectacles, headlight coverings, windscreens, signals or sunscreen devices.

## Revendications

1. Feuilles composites à propriétés optiques électriquement commutables, constituées de deux électrodes de commande et d'une feuille à microcompartiments avec des cavités qui contiennent des particules éléctrophorétiquement mobiles dans un liquide en suspension,
**caractérisées en ce que**
les cavités sont disposées de façon régulière dans la feuille à microcompartiments et présentent un profil de profondeur en forme de cône, le rapport de l'aire de la surface des cavités à celle de leur fond étant supérieur à 1,5 et des additifs électrorhéologiquement actifs se trouvant dans le liquide de suspension.

2. Feuilles composites selon la revendication 1,
**caractérisées en ce que**
la feuille à microcompartiments est optiquement transparente.

3. Feuilles composites selon les revendications 1 ou 2,
**caractérisées en ce que**
le liquide en suspension est optiquement transparent et incolore.

4. Feuilles composites selon les revendications 1 ou 2,
**caractérisées en ce que**
le liquide en suspension est optiquement transparent et coloré.

5. Feuilles composites selon la revendication 4,
**caractérisées en ce que**
trois cavités voisines contiennent toujours des liquides en suspension de couleurs différentes.

6. Feuilles composites selon l'une des revendications 1 à 5,
**caractérisées en ce que**
l'aire de la surface des cavités est supérieure à 10 000 µm².

7. Feuilles composites selon la revendication 6,
**caractérisées en ce que**
l'aire de la surface des cavités est supérieure à 250 000 µm².

8. Feuilles composites selon l'une des revendications 1 à 7,
**caractérisées en ce que**
les cavités ont une profondeur de 20 à 250 µm.

9. Feuilles composites selon la revendication 8,
**caractérisées en ce que**
les cavités ont une profondeur de 30 à 200 µm.

10. Feuilles composites selon l'une des revendications 1 à 9,
**caractérisées en ce que**
les cavités dans la feuille à microcompartiments sont séparées les unes des autres du côté supérieur par des nervures d'une largeur de 2 à 50 µm.

11. Feuilles composites selon la revendication 10,
**caractérisées en ce que**
les cavités dans la feuille à microcompartiments sont séparées les unes des autres du côté supérieur par des nervures d'une largeur de 5 à 25 µm.

12. Feuilles composites selon l'une des revendications 10 ou 11,
**caractérisées en ce que**
le côté supérieur des nervures de la feuille à microcompartiments présente un revêtement perméable à la lumière.

13. Feuilles composites selon l'une des revendications 1 à 12,
**caractérisées en ce que**
l'additif est une substance dissoute de façon homogène dans le liquide en suspension, produisant l'effet électrorhéologique.

14. Feuilles composites selon l'une des revendications 1 à 13,
**caractérisées en ce que**
comme substance dissoute dans le liquide de suspension et produisant un effet électrorhéologique, on utilise des polycondensats d'isocyanate de phényle et de polytétraméthylèneglycol ou d'isocyanate de p-chlorophényle et de polytétraméthylèneglycol ou de polyméthacrylate de méthyle comme sel alcalin ou sous forme de mélange avec des séquences polystyrène-(polyéthylène-co-propylène).

15. Feuilles composites selon l'une des revendications 1 à 12,
**caractérisées en ce que**
les particules électrophorétiquement mobiles présentent l'effet électrorhéologique.

16. Feuilles composites selon la revendication 15,
**caractérisées en ce que**
l'on trouve dans la suspension plusieurs types de particules, au moins un type de particule présentant l'effet électrorhéologique et au moins un type de particule présentant l'effet électrophorétique.

17. Feuilles composites selon l'une des revendications 15 ou 16,
**caractérisées en ce que**
les particules électrophorétiquement mobiles sont hydratées avec des polycondensats d'isocyanate de phényle et de polytétraméthylèneglycol ou d'isocyanate de p-chlorophényle et de polytétraméthylèneglycol, de polyméthacrylate de méthyle comme sel alcalin ou sont enrobées sous forme de mélange avec des séquences polystyrène-(polyéthylène-copropylène).

18. Feuilles composites selon l'une des revendications 15 ou 16,
**caractérisées en ce que**
l'on trouve dans la suspension des particules électrophorétiquement non mobiles, qui sont des polycondensats d'isocyanate de phényle et de polytétraméthylèneglycol ou d'isocyanate de p-chlorophényle et de polytétraméthylèneglycol, de polyméthacrylate de méthyle hydratées sous forme de sel alcalin, ou sous forme de mélange avec des séquences polystyrène-(polyéthylène-co-propylène).

19. Feuilles composites selon l'une des revendications 1 à 18,
**caractérisées en ce que**
la suspension est contenue dans des compartiments ayant une répartition de taille monomodale, unimodalc, bimodale ou multimodale.

20. Feuilles composites selon l'une des revendications 1 à 18,
**caractérisées en ce que**
la suspension est contenue dans des compartiments disposés de façon régulière ou stochastique avec une répartition de taille unimodale.

21. Feuilles composites selon l'une des revendications 1 à 18,
**caractérisées en ce que**
la suspension est contenue dans des compartiments disposés de façon régulière ou stochastique avec une répartition de taille bimodale.

22. Feuilles composites ayant des propriétés optiques électriquement commutables selon l'une des revendications 1 à 18,
**caractérisées en ce que**
la suspension est contenue dans des compartiments disposés de façon régulière ou stochastique avec une répartition de taille multimodale.

23. Feuilles composites selon l'une des revendications 1 à 22,
**caractérisées en ce que**
les propriétés optiques électriquement commutables sont au moins deux transparences optiques différentes.

24. Feuilles composites selon l'une des revendications 1 à 23,
**caractérisées en ce que**
les particules électrophorétiquement mobiles contiennent des pigments inorganiques ou organiques.

25. Feuilles composites selon la revendication 24,
**caractérisées en ce que**
les pigments inorganiques ou organiques contiennent TiO₂, Al₂O₃, ZrO₂, FeO, Fe₂O₃, du noir de fumée, des pigments de fluorescence, des phtalocyanines, des porphyrines ou des colorants azoïques.

26. Feuilles composites selon l'une des revendications 1 à 25,
**caractérisées en ce que**
les particules électrophorétiquement mobiles sont enrobées avec des polyacrylates, des polyméthacrylates, des polyuréthanes ou des polyamides.

27. Procédé de fabrication de feuilles composites à propriétés optiques électriquement commutables, constituées de deux électrodes de commande et d'une feuille à microcompartiments avec des cavités, qui contiennent des particules électrophorétiquement mobiles dans un liquide en suspension,
**caractérisé en ce que**
les cavités dans la feuille à microcompartiments sont disposées régulièrement et sont produites par des procédés d'érosion ou d'enlèvement de copeaux, présentent un profil de profondeur conique, le rapport de l'aire de la surface des cavités à celle de leur fond étant supérieur à 1,5 et des additifs à action électrorhéologiquc se trouvant contenus dans le liquide en suspension.

28. Procédé de fabrication de feuilles composites selon la revendication 27,
**caractérisé en ce que**
les cavités sont produites dans la feuille à microcompartiments par une irradiation laser à effet d'érosion.

29. Utilisation des feuilles composites à propriétés optiques électriquement commutables selon l'une des revendications 1 à 26 pour des écrans d'images planes, des montres, des tableaux d'affichage ou des ordinateurs.

30. Utilisation des feuilles composites à propriétés électriquement commutables selon l'une des revendications 1 à 26 pour la fabrication de vitres de fenêtres, de revêtements, de toits de serres, d'emballages, de textiles, de lunettes, de couvercles de phares, de pare-brises, de signaux ou de dispositifs de protection contre le soleil.
